# EUROPÄISCHE PATENTANMELDUNG

(11) **EP 0 553 408 A1**
(43) Veröffentlichungstag der Anmeldung: **04.08.1993**
(21) Anmeldenummer: 92119031.0
(22) Anmeldetag: 06.11.1992
(51) Int. Cl.: C23G 1/36, B01D 17/00, B01D 17/02

(54) **Verfahren und Vorrichtung zum Wiederaufbereiten und Wiederverwenden von wässrigen, öl- und/oder fetthaltigen Reinigungslösungen**

(30) Priorität: 07.11.1991 DE 4136561; 14.11.1991 DE 4137445
(71) Anmelder: WACHE OBERFLÄCHENTECHNIK GMBH & CO., D-22844 Norderstedt (DE)
(72) Erfinder: Krückeberg, Günther, W-2000 Hamburg 65 (DE); Cremer, Benno, B-4730 Raeren (BE)
(74) Vertreter: Einsel, Martin, Dipl.-Phys.

(57) **Zusammenfassung**

Ein Verfahren zum Wiederaufbereiten von wässrigen, öl- und/oder fetthaltigen Reinigungslösungen bei der Reinigung industrieller Teile sieht vor, daß die öl- und/oder fetthaltige Reinigungslösung zunächst einem Pufferbehälter zugeführt, daß aus dem aufschwimmenden flüssigen Anteil im Pufferbehälter Flüssigkeit einer Filtrationsanlage zur Ölabscheidung zugeführt wird, daß der abgeschiedene ölhaltige Anteil aus der Filtrationsanlage sowie der im Pufferbehälter sich absetzende Anteil einer chemischen Aufbereitungseinrichtung zugeführt wird, daß nach der chemischen Aufbereitung eine Filterpresse zur Trennung der Feststoffe vom Wasseranteil durchlaufen wird und daß das aus der Filterpresse austretende Wasser in einem Verdampfer entsalzt und in den Reinigungsvorgang wieder zurückgeführt wird.

## Beschreibung

Die Erfindung betrifft ein Verfahren und eine Vorrichtung zum Wiederaufbereiten und Wiederverwenden von wässrigen, öl- und/oder fetthaltigen Reinigungslösungen bei der Reinigung industrieller Teile.

Es ist bekannt, zum Wiederaufbereiten von wässrigen, öl- und/oder fetthaltigen Reinigungslösungen Ölabscheider, Zentrifugen oder Ultrafiltrationsanlagen einzusetzen. Bei diesen Anlagen fällt in erheblichem Maße Abwasser an. Aus der DE 35 12 207 A1 ist ein Verfahren bekannt, bei dem ein im Ölabscheider abgeschiedenes Gemisch aus Öl, Fett und Reinigungslösung zum Zwecke des Eindickens einer Verdampfung unterworfen wird.

Das bei der Verdampfung entstehende Kondensat wird in die Reinigungslösung rückgeführt.

Dieses Verfahren ist bei verschiedenen auftretenden Verschmutzungen nicht geeignet bzw. noch nicht leistungsfähig genug. Dieses Verfahren hat auch einen erheblichen Nachteil, der stets bei allen Verdampfungen auftritt: Aus dem im Ölabscheider abgeschiedenen Gemisch kann ausschließlich der Wasseranteil als Kondensat gewonnen und wieder verwendet werden. Alle übrigen Teile, also Öl, Fett und Reinigungslösung werden gemeinsam entweder als Kuchen oder als flüssiger Abfall der Entsorgung zugeführt und verbrannt oder deponiert.

Insbesondere für die Reinigungslösung ist dies aber keineswegs die optimale Lösung. Diese ist nämlich erfahrungsgemäß weitgehend noch nicht verbraucht und könnte daher durchaus weiterverwendet werden.

Nicht mit der Wiederaufbereitung, statt dessen aber mit der Entsorgung von Ölemulsionen und ölhaltigen Abwässern beschäftigt sich ein Aufsatz von "von Mylius - Die Entsorgung von Ölemulsionen und ölhaltigen Abwässern", in: wlb Wasser, Luft und Betrieb 7-8/88, Seiten 28 bis 33. Es werden verschiedene chemische, thermische, Adsorbtions-, und Filtrationsverfahren und auch Kombinationen davon vorgeschlagen, mit denen es möglich wird, aus ölhaltigen Flüssigkeiten einen Klarwasseranteil abzuscheiden und zu entsorgen, während die Ölphase zur Verbrennung geführt wird. Die vorgeschlagenen Verfahren sind zur Abwasserreinigung in der Lage, jedoch nicht dazu gedacht und auch ungeeignet, chemikalienhaltige Reinigungslösungen, die mit öl- und/oder fetthaltigen Partikeln und Verschmutzungen versetzt sind, wieder aufzubereiten.

Aufgabe der Erfindung ist es daher, ein Verfahren und eine zur Durchführung des Verfahrens geeignete Vorrichtung vorzuschlagen, die eine verbesserte Wiederaufbereitung von verschmutzten Reinigungslösungen durchführen können.

Diese Aufgabe wird bei einem eingangs erwähnten Verfahren gelöst, in dem die öl- und/oder fetthaltige Reinigungslösung zunächst einem Pufferbehälter zugeführt wird, aus dem aufschwimmenden flüssigen Anteil im Pufferbehälter Flüssigkeit einer Filtrationsanlage zur Ölabscheidung zugeführt wird, der abgeschiedene ölhaltige Anteil aus der Filtrationsanlage sowie der im Pufferbehälter sich absetzende Anteil einer chemischen Aufbereitungseinrichtung zugeführt wird, nach der chemischen Aufbereitung eine Filterpresse zur Trennung der Feststoffe vom Wasseranteil durchlaufen wird, das aus der Filterpresse austretende Wasser in einem Verdampfer entsalzt und in den Reinigungsvorgang wieder zurückgeführt wird, der gereinigte Anteil aus der Filtrationsanlage einem zweiten Pufferbehälter zugeführt wird, dem auch das in dem Verdampfer entsalzte Wasser zugeführt wird und die Rückführung in den Reinigungsvorgang aus dem zweiten Pufferbehälter erfolgt.

Mit diesem Verfahren wird es möglich, eine abwasserfreie Wiederaufbereitung auch von chemisch besonders verschmutzten oder schwierigen Reinigungslösungen durchzuführen und darüber hinaus auch eine Wiederverwendung der Reinigungslösung zu ermöglichen.

Anlagen, beispielsweise zur Reinigung und Vorbereitung von Antriebsaggregaten in der Automobilindustrie, werden zunehmend komplizierter, müssen teilweise aggressive Waschmedien einsetzen und komplizierter werdenden Werkstückgeometrien gerecht werden. Die Lebensdauer dieser Antriebsaggregate wird ganz wesentlich vom Reinheitsgrad der Werkstücke mitbestimmt, was umgekehrt nachhaltige Wirkungen auf die Zusammensetzung der verschmutzten Reinigungslösungen hat.

Eine abwasserminimierte oder soweit möglich abwasserfreie Anlagenführung, wie sie durch das erfindungsgemäße Verfahren durchführbar ist, ist eine besonders umweltfreundliche Maßnahme. Nicht nur wird - wie bisher gelegentlich praktiziert - das Abwasser so aufbereitet, daß es hinterher als Abwasser abgeführt werden kann, vielmehr fällt es überhaupt nicht mehr an, sondern wird in den Kreislauf zurückgeführt.

Entsorgt werden müssen lediglich noch der Filterkuchen und das Filtervlies. Nur die in das Reinigungsverfahren eingeschleppten Schmutzstoffe müssen am Ende entsorgt werden.

Für die Rückführung ist es besonders vorteilhaft, wenn vor dem Wiedereintritt in den Reinigungsprozeß ein zweiter Pufferbehälter vorgeschaltet ist. Diesem zweiten Pufferbehälter können sowohl der gereinigte Anteil aus der Filtrationsanlage als auch das in dem Verdampfer entsalzte Wasser zugeführt. Die beiden unterschiedlichen Aufbereitungszweige führen das entstehende Wasser, bzw. die entstehende wässrige Lösung, also zunächst einem Pufferbehälter zu, aus dem sie dann bedarfsgemäß in den Reinigungsprozeß zurückgeführt werden können.

Dabei kann vorteilhaft zwischen den zweiten Pufferbehälter und die Zurückführung in den Reinigungsvorgang noch eine Dosierstufe eingeschaltet werden, um eine Zugabe von Produktkomponenten erfolgen zu lassen, beispielsweise die Reinigungsflüssigkeit mit bestimmten, erschöpften Zusätzen zu versehen.

Dabei ist zu berücksichten, daß in dem Wiederaufbereitungsprozeß ja keineswegs notwendig Wasser mit einem pH-Wert von 7 bearbeitet wird, bzw. am Ende zur Rückführung ansteht. Es kann sich vielmehr auch um extrem alkalische Flüssigkeiten mit einem pH-Wert von 14 handeln, die verschmutzt sind und als wässrige Lösungen am Ende dem Reinigungsprozeß zurückgeführt werden können. Dieses ist bei Reinigungsflüssigkeiten in den Anlagen für die Automobilindustrie sogar häufig der Fall.

Besonders vorteilhaft wird als Filtrationsanlage eine Ultrafiltrationsstufe und als Filterpresse eine Kammerfilterpresse eingesetzt. Versuche haben ergeben, daß diese Elemente einen besonders guten Effekt im Gesamtverfahren bei dieser speziellen Anwendung zeigen.

Ein spezielles Problem bei der Reinigung von Werkstücken besteht auch darin, daß anschließend an die Reinigung in einem, z.B. alkalischen Bad, ein Abspülen in einer gesonderten Spritz- oder Spülstation stattfinden muß. Dadurch werden die noch anhaftenden Metallspäne und Flüssigkeiten entfernt. Zum Abspülen wird Wasser mit einem pH-Wert von 7 verwendet, das nach dem Spülen natürlich als wässrige, öl- und /oder fetthaltige Flüssigkeit anfällt. Die chemische Zusammensetzung unterscheidet sich jedoch von der aus dem vorangegangenen Reinigungsschritt, schon durch die unterschiedlichen pH-Werte.

Von besonderem Vorteil ist es dann, wenn beim Anfallen von mehreren unterschiedlich verschmutzten Reinigungslösungen oder solchen mit unterschiedlichen pH-Werten die ersten Reinigungsstufen getrennt durchgeführt, die chemische Aufbereitung jedoch in der gleichen chemischen Aufbereitungseinrichtung durchgeführt werden kann.

Es wird also zunächst ein weiterer Pufferbehälter mit dem aus der Spülstufe anfallenden Abwasser gefüllt, wobei wiederum die flüssigen Anteile über eine Filtrationsanlage laufen. Das aus der Filtrationsanlage gewonnene Wasser kann dem Reinigungsprozeß in der Spülstufe wieder zugeführt werden, da es die chemischen Voraussetzungen hierfür aufweist. Die in der Filtrationsanlage oder bereits im Pufferbehälter unten abgeschiedenen Bestandteile können dagegen der chemischen Aufbereitungseinrichtung aus dem anderen Teil des Verfahrens zugeführt und dort gemeinsam entsorgt werden.

Eine Vorrichtung zur Durchführung der vorstehenden Verfahren zeichnet sich aus durch einen Pufferbehälter, eine dem Pufferbehälter nachgeschaltete chemische Aufbereitungseinrichtung, eine der chemischen Aufbereitungseinrichtung nachgeschaltete Filterpresse, einen der Filterpresse nachgeschalteten Verdampfer sowie eine Filtrationsanlage, deren Eingang mit dem oberen Bereich des Pufferbehälters verbunden und deren Ausgang für abgeschiedene ölhaltige Anteile mit der chemischen Aufbereitungseinrichtung verbunden ist.

Besonders bevorzugt ist ein zweiter Pufferbehälter vorgesehen dessen Eingang mit dem Ausgang des Verdampfers und dem Ausgang der Filtrationsanlage für gereinigte Flüssigkeiten verbunden und dessen Ausgang mit der Rückführung in den Reinigungsvorgang verbunden ist.

Für das oben beschriebene Reinigungsverfahren mit zwei unterschiedlichen Reinigungsflüssigkeiten eignet sich besonders eine Vorrichtung, bei der ein weiterer Pufferbehälter vorgesehen ist, dem verschmutzte Reinigungslösungen aus einem anderen Reinigungsvorgang zugeführt werden und dessen Ausgang mit der chemischen Aufbereitungseinrichtung verbunden ist.

Im folgenden wird anhand der Zeichnung ein Ausführungsbeispiel der Erfindung näher erläutert. Es zeigen:
- Fig. 1: eine schematische Darstellung einer ersten Ausführungsform;
- Fig. 2: eine schematische Darstellung einer zweiten Ausführungsform.

Von einem Zulauf A strömt verschmutzte, öl- und/oder fetthaltige wässrige Reinigungslösung in einen ersten Pufferbehälter 10. Vor dem Pufferbehälter 10 (nicht dargestellt) kann noch ein Sieb, ein Kreisbogenfilter oder ein anderes zur Erfassung von Feststoffen und größeren Verunreinigungen, z.B. Spänen, dienendes Element eingeschaltet sein.

In dem Pufferbehälter 10 befindet sich nun verschmutzte Flüssigkeit, etwa mit einem pH-Wert von 14, sofern es sich um stark alkalische Reinigungslösung handelt. Am Boden des Pufferbehälters 10 sedimentieren die restlichen, vom Sieb oder Kreibogenfilter nicht erfaßten Feststoffe. Der nicht sedimentierende, rein flüssige Anteil wird über eine Leitung 11 in eine Filtrationsanlage 12, beispielsweise einer Ultrafiltrationsanlage gepumpt. Das dabei abgeschiedene Öl gelangt über eine Leitung 13 in eine chemische Aufbereitungseinrichtung 14. In die gleiche chemische Aufbereitungseinrichtung 14 gelangen auch über einen Hahn 15 in einer Leitung 16 die sedimentierenden Feststoffe aus dem ersten Pufferbehälter 10 sowie außerdem von einem Ölabscheider aus dem sonstigen Bereich der Reinigungsanlage abgeführtes Öl (bei C).

Mittels des Hahnes 15 können die sedimentierenden Feststoffe diskontinuierlich abgelassen werden. Innerhalb des ersten Pufferbehälters 10 können die Feststoffe daher bis zu einem bestimmtan Punkt angesammelt werden, sofern dies gewünscht wird.

Die Filtrationsanlage 12 fördert die von dem abgeschiedenen Öl befreite Reinigungslösung zu einem Teil wieder zurück in den ersten Pufferbehälter 10. Zugleich wird der größte Teil der wiederaufbereiteten Reinigungsflüssigkeit über eine Leitung 17 in einen noch später zu diskutierenden zweiten Pufferbehäler 30 gefördert.

In der chemischen Aufbereitungseinrichtung 14 werden Chemikalien (bei D) zugesetzt, beispielsweise Schwefelsäure H₂SO₄, Eisenchlorid FeCl₃ und Calcium-Hydroxyd Ca (OH)₂.

Nach dem Durchlaufen der chemischen Aufbereitungseinrichtung 14 werden die stehenden Substanzen über eine Leitung 18 in eine Filterpresse 20 gefördert. Diese, beispielsweise eine Kammerfilterpresse, preßt die jetzt noch flüssigen Bestandteile in einen Auffangbehälter 21, behält aber die Feststoffe im Filtervlies.

Dieses Filtervlies, bzw. der sich bildende Filterkuchen, in der Filterpresse 20 sind letztendlich die zu entsorgenden Bestandteile und enthalten im wesentlichen die Schmutzkonzentrate.

In dem Auffangbehälter 21 befindet sich nun eine noch mit gelösten Salzen aus der chemischen Aufbereitung versetzte Reinigungslösung. Daher ist ein Verdampfer 22 nachgeschaltet, in dem die Reinigungsflüssigkeit erhitzt wird. Vom Verdampfer gelangt die wiederaufbereitete Reinigungsflüssigkeit nun über einen Wärmetauscher 23 in den zweiten Pufferbehälter 30, in den auch die wiederaufbereitete Reinigungsflüssigkeit aus der Filtrationsanlage 12 über die Leitung 17 gelangt. Dosiert über Hähne 31 und 32 kann je nach Bedarf die Reinigungsflüssigkeit aus dem zweiten Pufferbehälter (sie besitzt nach wie vor den ursprünglichen pH-Wert, beispielsweise also pH 14) erneut über den Wärmetauscher 23 bei B zurück in den Reingigungsvorgang geleitet werden. Dabei können hier (nicht dargestellt) zusätzliche, möglicherweise verbrauchte oder erschöpfte Reinigungschemikalien oder Zusätze beigegeben werden.

Das im Verdampfer 22 gewonnene Kondensat wird zur Ergänzung und Erwärmung des zweiten Pufferbehälters 30 genutzt. Zum Betrieb der Anlage wird in erster Linie lediglich eine erste Füllung mit Fremdwasser benötigt. Die Ergänzung von etwaigen Verschleppungs- und Verdampfungsverlusten während des Betriebes muß mit vollentsalztem Wasser zur Vermeidung einer Aufsalzung erfolgen.

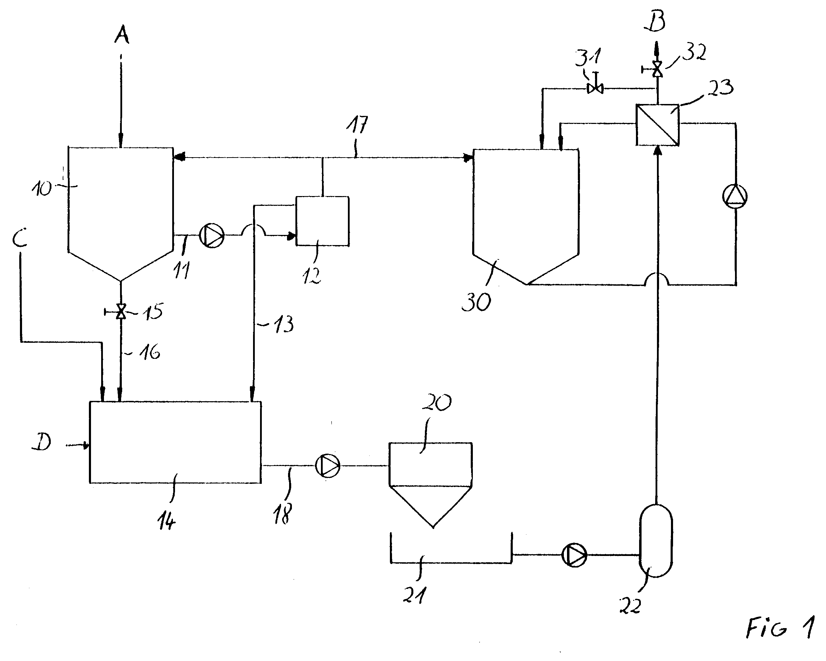

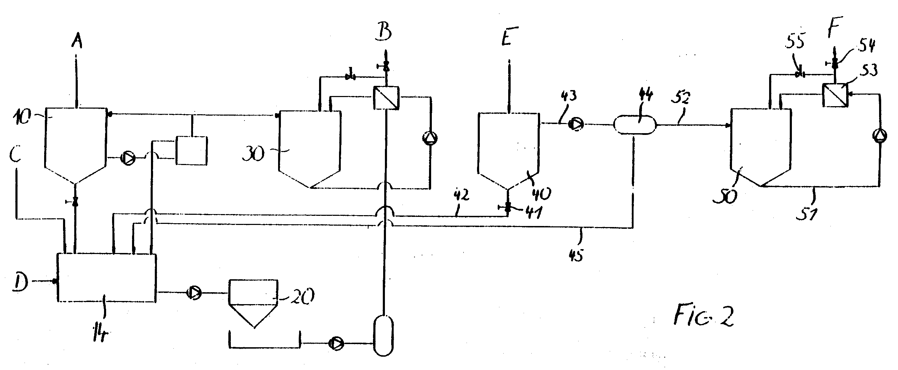

In der Fig. 2 ist eine Wasseraufbereitungsanlage dargestellt, bei der zusätzlich zu der Wiederaufbereitung gemäß dem ersten Ausführungsbeispiel aus Fig. 1 auch eine Wiederaufbereitung eines geringer verschmutzten Wassers erfolgt. Die Elemente aus Fig. 1 sind im linken Teil der Fig. 2 wieder zu erkennen und werden im folgenden nicht erneut beschrieben. Die geringer verschmutzte und/oder einen anderen pH-Wert besitzende Reinigungsflüssigkeit wird der Vorrichtung über E zugeführt und gelangt dort in einen dritten Pufferbehälter 40. Auch in diesem Falle kann ein Sieb oder Keisbogenfilter zum Auffangen von Feststoffen vorgeschaltet sein. Im dritten Pufferbehälter 40 sedimentieren wiederum Verschmutzungsteilchen ab und können über einen Hahn 41 und eine Leitung 42 der chemischen Aufbereitungseinrichtung 14 zugeführt werden. Die Flüssigkeitsanteile aus dem oberen Bereich des dritten Pufferbehälters 40 werden über eine Leitung 43 einem Verdampfer 44 zugeführt. Die bei dem Verdampfungsprozeß als Feststoffe ausscheidenden Salze und Festteilchen können über eine Leitung 45 ebenfalls der chemischen Aufbereitungseinrichtung 14 zugeführt werden. Das Kondensat wird über eine Leitung 52 einem vierten Pufferbehälter 50 zugeführt. In dem vierten Pufferbehälter 50 wird ebenfalls wie im dritten Pufferbehälter 40 ein pH-Wert eingestellt, im beschriebenen Beispiel ein pH-Wert von 7. Anstelle des Verdampfers 44 könnte auch wiederum eine Ultrafiltrationsstufe vorgesehen werden.

Aus dem vierten Pufferbehälter 50 wird die dort vorhandene Reinigungsflüssigkeit über eine Leitung 51 einem Wärmeaustauscher 53 und von dort ggf. über Hähne 54 und 55 bei F wieder in den Reinigungsvorgang zurückgeführt; im Beispiel dem Spülvorgang der im wesentlichen mit Reinwasser durchgeführt wird.

## Patentansprüche

1. Verfahren zum Wiederaufbereiten und Wiederverwenden von wässrigen, öl- und/oder fetthaltigen Reinigungslösungen bei der Reinigung industrieller Teile, bei dem
- die öl- und/oder fetthaltige Reinigungslösung zunächst einem Pufferbehälter (10) zugeführt wird,
- aus dem aufschwimmenden flüssigen Anteil im Pufferbehälter (10) Flüssigkeit einer Filtrationsanlage (12) zur Ölabscheidung zugeführt wird,
- der abgeschiedene ölhaltige Anteil aus der Filtrationsanlage (12) sowie der im Pufferbehälter (10) sich absetzende Anteil einer chemischen Aufbereitungseinrichtung (14) zugeführt wird,
- nach der chemischen Aufbereitung eine Filterpresse (20) zur Trennung der Feststoffe vom Wasseranteil durchlaufen wird,
- das aus der Filterpresse (20) austretende Wasser in einem Verdampfer (22) entsalzt und in den Reinigungsvorgang wieder zurückgeführt wird,
- der gereinigte Anteil aus der Filtrationsanlage (12) einem zweiten Pufferbehälter (30) zugeführt wird, dem auch das in dem Verdampfer (22) entsalzte Wasser zugeführt wird und
- die Rückführung in den Reinigungsvorgang aus dem zweiten Pufferbehälter (30) erfolgt.

2. Verfahren nach Anspruch 1,
**dadurch gekennzeichnet**,
daß als Filtrationsanlage (12) eine Ultrafiltrationsstufe eingesetzt wird.

3. Verfahren nach einem der vorstehenden Ansprüche,
**dadurch gekennzeichnet**,
daß als Filterpresse (20) eine Kammerfilterpresse eingesetzt wird.

4. Verfahren nach einem der vorstehenden Ansprüche,
**dadurch gekennzeichnet**,
daß zwischen dem zweiten Pufferbehälter (30) und die Zurückführung (B) in den Reinigungsvorgang eine Dosierstufe eingeschaltet ist, mit der eine Zugabe von Produktkomponenten erfolgen kann.

5. Verfahren nach einem der vorstehenden Ansprüche,
**dadurch gekennzeichnet**,
daß beim Anfallen von mehreren unterschiedlich verschmutzten Reinigungslösungen oder solchen mit unterschiedlichen pH-Werten die ersten Reinigungsstufen getrennt durchgeführt, die chemische Aufbereitung jedoch in der gleichen chemischen Aufbereitungseinrichtung (14) durchgeführt werden.

6. Vorrichtung zur Durchführung eines der vorstehenden Verfahren,
**gekennzeichnet durch**
einen Pufferbehälter (10), eine dem Pufferbehälter (10) nachgeschaltete chemische Aufbereitungseinrichtung (14), eine der chemischen Aufbereitungseinrichtung (14) nachgeschaltete Filterpresse (20), einen der Filterpresse nachgeschalteten Verdampfer (22) sowie eine Filtrationsanlage (12), deren Eingang mit dem oberen Bereich des Pufferbehälters (10) verbunden und deren Ausgang für abgeschiedene ölhaltige Anteile mit der chemischen Aufbereitungseinrichtung (14) verbunden ist.

7. Vorrichtung nach Anspruch 6,
**dadurch gekennzeichnet**,
daß ein zweiter Pufferbehälter (30) vorgesehen ist, dessen Eingang mit dem Ausgang des Verdampfers (22) und dem Ausgang der Filtrationsanlage (12) für gereinigte Flüssigkeiten verbunden und dessen Ausgang mit der Rückführung (B) in den Reinigungsvorgang verbunden ist.

8. Vorrichtung nach Anspruch 6 oder 7,
**dadurch gekennzeichnet**,
daß ein weiterer Pufferbehälter (40) vorgesehen ist, dem verschmutzte Reinigungslösungen aus einem anderen Reinigungsvorgang zugeführt werden und dessen Ausgang mit der chemischen Aufbereitungseinrichtung (14) verbunden ist.

9. Vorrichtung nach einem der Ansprüche 6 bis 8,
**dadurch gekennzeichnet**,
daß ein Wärmetauscher (23) nach dem Verdampfer (22) vorgesehen ist, mit dem die Verdampfungsenergie der gereinigten Flüssigkeit im Pufferbehälter (30) zurückgewonnen wird.
